# FASCICULE DE BREVET EUROPEEN

(11) **EP 0 601 625 B1**
(45) Date de publication et mention de la délivrance du brevet: **05.03.1997**
(21) Numéro de dépôt: 93203287.3
(22) Date de dépôt: 24.11.1993
(51) Int. Cl.: B29C 49/58, B01F 15/00

(54) **Procédé et dispositif pour le moulage par soufflage de corps creux en matière thermoplastique**
Verfahren und Vorrichtung zum Blasformen von Hohlkörpern aus Thermoplastischen Material
Method and apparatus for blow moulding hollow articles of plastic material

(30) Priorité: 07.12.1992 BE 9201072
(43) Date de publication de la demande: 15.06.1994
(73) Titulaire: SOLVAY (Société Anonyme), B-1050 Bruxelles (BE)
(72) Inventeur: Masson, Didier, B-1020 Bruxelles (BE)
(74) Mandataire: Dufrasne, Eugène

(56) Documents cités:
- US-A- 3 455 540
- US-A- 3 819 317
- US-A- 4 083 653

## Description

La présente invention concerne un procédé et un disposif pour le moulage par soufflage de corps creux en matière thermoplastique tel que décrit dans US-A-3 819 317 par exemple.

Pour la production en série de corps creux en matière thermoplastique tels que des flacons, des bidons, des réservoirs, etc., on utilise de façon quasi universelle la technique de moulage par soufflage qui implique l'emprisonnement d'une portion tubulaire de matière thermoplastique fondue dans un moule de soufflage approprié, la mise en forme de cette paraison dans le moule par l'intermédiaire d'une tuyère de soufflage insérée dans la paraison et injectant dans celle-ci un gaz sous pression, la réfrigération du corps creux ainsi moulé dans le moule et son extraction du moule.

Pour obtenir une bonne productivité lors de telles fabrications, il importe d'accélérer chaque étape de production et notamment l'étape de réfrigération qui peut se révéler consommatrice de temps en particulier lors de la production de corps creux de forte épaisseur de paroi.

A cet effet, il a notamment été proposé, lors du soufflage ou après celui-ci, d'injecter dans le corps creux produit un gaz maintenu à une très basse température (air, azote cryogénique, anhydride carbonique, etc), cette réfrigération de la paroi interne se combinant avec la réfrigération de la paroi externe induite par le moule.

Par ailleurs, pour certaines applications, il importe de produire des corps creux en matière thermoplastique présentant une imperméablité améliorée aux gaz et aux liquides.

Ainsi, par exemple, on sait que des corps creux tels que des réservoirs à carburant réalisés en polyoléfines et notamment en polyéthylènes de haute densité laissent diffuser au travers de leur paroi une faible quantité de l'hydrocarbure stocké et, dès lors, compte tenu des normes écologiques de limitation de la pollution et de respect de l'environnement et des cahiers de charges imposés par les utilisateurs, il est primordial d'effectuer un traitement d'imperméabilisation très efficace sur de tels corps creux pour réduire fortement les émissions ultérieures d'hydrocarbures.

Un traitement qui se révèle très efficace à cet effet consiste à traiter superficiellement la paroi interne de ces corps creux par un gaz réactif (fluor, anhydride sulfurique, etc,) ce traitement pouvant avantageusement être effectué en ligne durant leur moulage soit en utilisant un gaz réactif comme gaz de soufflage soit en injectant un gaz réactif dans les corps creux après leur moulage au moyen d'un gaz classique (air, azote).

Toutefois, lors de l'exploitation des techniques de réfrigération ou de traitement superficiel, le gaz de réfrigération ou de traitement est introduit dans les corps creux moulés et maintenu sous pression tout au long du traitement. Dès lors, lorsque la turbulence induite par l'injection du gaz de réfrigération ou de traitement se dissipe c'est-à-dire, en fait, lorsque la pression finale est atteinte, les échanges de chaleur ou la réaction de traitement se limitent entre la paroi interne du corps creux et la portion du gaz se trouvant directement en contact avec celle-ci. Il en résulte donc que seulement une faible proportion de la totalité du gaz injecté dans le corps creux se révèle réellement effective pour le but poursuivi.

Dès lors, par exemple, lors d'un traitement superficiel de la paroi interne d'un corps creux tel qu'un réservoir en polyoléfine destiné à contenir un carburant mixte contenant un composé oxygéné tel que du méthanol, on est contraint d'allonger fortement la durée de traitement en vue d'obtenir finalement une imperméabilisation acceptable.

La présente invention a, dès lors, pour objet principal de fournir un procédé très simple qui permet d'éliminer tous les inconvénients sus-mentionnés.

La présente invention concerne, dès lors, un procédé de moulage par soufflage de corps creux en matière thermoplastique impliquant l'injection, par une tuyère de soufflage, d'au moins un gaz sous pression dans une portion de paraison thermoplastique enfermée dans un moule qui se caractérise en ce que l'on soumet le gaz à une agitation forcée durant le moulage.

Selon un mode de réalisation qui est préféré par la demanderesse l'agitation forcée du gaz est obtenue par des moyens mécaniques prévus au niveau de la tuyère de soufflage et imposant un brassage en continu de ce gaz dans le corps creux moulé.

Un moyen particulièrement pratique à cet effet consiste à prévoir un moyen d'agitation mécanique tel qu'un ventilateur ou une turbine au niveau de la tuyère de soufflage.

Grâce au procédé conforme à l'invention, la paroi interne du corps creux durant sa production est en continu mise en contact avec du gaz frais qu'il s'agisse du gaz de soufflage, d'un gaz de réfrigération ou d'un gaz de traitement superficiel. Il en résulte que l'action de ces gaz est rendue beaucoup plus efficace et plus homogène ce qui permet, d'une part, de réduire les temps de production et, d'autre part, de réduire les consommations de gaz de soufflage, de gaz de réfrigération et/ou de gaz réactif.

Le procédé conforme à l'invention peut être utilement exploité lors du moulage par soufflage de corps creux réalisés en toute matière thermoplastique et ce sur n'importe quelle installation classique de moulage par extrusion-soufflage ou par injection-soufflage.

Il convient encore de noter que le procédé conforme à l'invention se révèle également intéressant lors d'un post-traitement de la paroi interne et ou externe de corps creux par un gaz réactif réalisé, dans une enceinte appropriée, après démoulage de ces corps creux. Dans ce cas, la mise en agitation forcée du gaz réactif, dans l'enceinte de traitement, permet également de réaliser des économies substantielles de temps et de consommation en gaz réactif et, dès lors, cette variante de réalisation doit être considérée comme faisant partie intégrante du cadre de la présente invention.

La présente invention concerne également un dispositif convenant pour la réalisation du procédé qui vient d'être décrit.

Le dispositif conforme à l'invention comporte au moins un moule de soufflage pouvant coopérer avec au moins une tuyère de soufflage pour la production de corps creux par moulage par soufflage qui se caractérise en ce que la tuyère de soufflage est équipée d'au moins un moyen mécanique permettant une mise en agitation forcée des gaz injectés dans le moule.

Selon un mode de réalisation qui est préféré par la demanderesse ce moyen mécanique est avantageusement constitué par un ventilateur prévu dans l'extrémité de la tuyère de soufflage et qui est donc introduit et mis en service dans le corps creux pendant son moulage. Compte tenu du fait que ce ventilateur est appelé à être introduit dans le moule de soufflage par l'orifice de soufflage de ce dernier, il convient évidemment que ce ventilateur soit proportionné en conséquence. A cet effet, la demanderesse préfère mettre en oeuvre un ventilateur équipé de pales escamotables qui sont repliées lors de son introduction ou de son retrait du moule et qui sont dépliées, par exemple sous l'action de forces centrifuges, lors de sa mise en service. D'autres moyens sont toutefois utilisables et, à titre non exhaustif, on peut notamment citer le recours à une turbine compacte à air comprimé disposée dans la tuyère de soufflage.

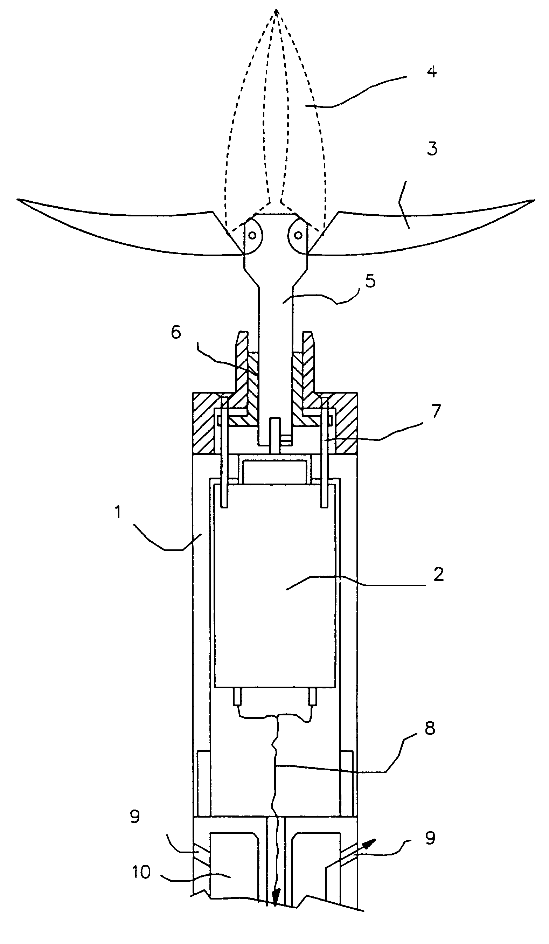

Le dispositif préféré par la demanderesse est, en outre, explicité plus en détail dans la description qui va suivre et dans laquelle on se réfèrera à la figure 1 du dessin annexé qui montre en coupe une tuyère de soufflage équipée d'un ventilateur.

Ainsi qu'il apparaît sur la figure, la tuyère de soufflage 1 est prolongée par un ventilateur 5 qui peut être mis en rotation par un moteur 2 pouvant être alimenté par une source électrique extérieure via les connexions 8 et solidarisé avec la tuyère par l'intermédiaire de vis de fixation 7.

Le ventilateur 5 est équipé de pales articulées 3,4 qui peuvent se déplier par action centrifuge lors de sa mise en service et se replier axialement en position de repos.

Grâce à cette disposition, le ventilateur 5 peut être aisément introduit dans la paraison tubulaire à mouler (non représentée) lors de l'insertion de la tuyère dans le moule de souflage (également non représenté) en vue de débuter un cycle de moulage ou retiré du corps creux moulé lors du retrait de tuyère du moule de soufflage en fin d'un cycle de moulage.

La tuyère de soufflage 1 comporte également de façon classique un circuit 10 et des orifices 9 permettant l'injection et l'évacuation des gaz de soufflage, de réfrigération et/ou de traitement dans la préforme ou dans le corps creux déjà moulé.

Lorsque la tuyère de soufflage 1 est notamment utilisée pour injecter un gaz de traitement il convient évidemment que les éléments appelés à être mis en contact avec ce gaz soient réalisés en des matériaux qui résistent à l'action de ce gaz. Il convient également dans ce cas de protéger le moteur d'entraînement 2 contre une agression par ce gaz par exemple en disposant une bague d'étanchéité 6 autour de l'arbre du ventilateur 5.

Dans une variante de réalisation qui n'est pas représentée le montage peut être réalisé de façon telle que le moteur 2 puisse être monté à l'extérieur de la tuyère et, dans ce cas, présenter un volume et une puissance accrus.

Le procédé et le dispositif conformes à l'invention et les avantages qu'ils procurent sont, en outre, illustrés par les exemples de réalisation qui suivent.

### Exemple 1

En utilisant la tuyère de soufflage décrite ci-avant et équipée d'un ventilateur d'une puissance de 10 W on a produit par moulage par soufflage deux séries de réservoirs en polyéthylène de haute densité d'une capacité de 83 litres et d'épaisseur moyenne de paroi égale à 5 mm.

Pour chaque série, le soufflage a été effectué durant 40 s au moyen d'azote à température ambiante et suivi en ligne d'un traitement de fluoration à température ambiante consommant 17 g de fluor (dilué à 2 % dans de l'azote).

La première série de réservoir a été produite sans mettre le ventilateur en service tandis que la seconde série a été produite en mettant celui-ci en service.

Des réservoirs prélevés dans ces deux séries ont ensuite été remplis de carburant (essence normalisée CEC-RF-08-A-85) à 50 % de leur capacité utile et stockés à 40 °C suivant la Directive européenne ECE 34 annexe 5 et les pertes en poids de ces réservoirs ont été mesurées toutes les semaines durant 6 mois.

En procédant de cette façon, on a constaté que la série de réservoirs produite sans mettre en service le ventilateur accusait une perte de 25 g tandis que cette perte était réduite à 16 g pour la série de réservoirs produite en exploitant la ventilation.

### Exemple 2

En utilisant la tuyère de soufflage décrite ci-avant et équipée d'un ventilateur d'une puissance de 15 W on a produit par moulage par soufflage deux séries de réservoirs en polyéthylène de haute densité d'une capacité de 60 litres et d'épaisseur moyenne de paroi égale à 5,5 mm.

Pour chaque série, le soufflage a été effectué durant 60 s au moyen d'azote et suivi en ligne d'un traitement de fluoration énergique consommant 60 g de fluor.

La première série de réservoirs a été produite sans mettre le ventilateur en service tandis que la seconde série a été produite en mettant celui-ci en service.

Des réservoirs prélevés dans ces deux séries ont ensuite été remplis de carburant (essence normalisée CEC-RF-08-A-85 en mélange avec du méthanol dans le rapport volumique 85 % d'essence - 15 % de méthanol) à 50 % de leur capacité utile. Les pertes en poids de ces réservoirs ont été mesurées toutes les semaines durant 91 jours.

En procédant de cette façon, on a constaté que la série de réservoirs produite sans mettre en service le ventilateur accusait une perte journalière d'hydrocarbures s'élevant à 1,3 g/24h tandis que cette perte était réduite à 0,9 g/24h pour la série de réservoirs produite en exploitant la ventilation.

## Revendications

1. Procédé de moulage par soufflage de corps creux en matière thermoplastique impliquant l'injection, par une tuyère de soufflage, d'au moins un gaz sous pression dans une portion de paraison thermoplastique enfermée dans un moule caractérisé en ce que l'on soumet le gaz dans le moule à une agitation forcée durant le moulage.

2. Procédé selon la revendication 1 caractérisé en ce que l'agitation est obtenue par l'intermédiaire d'au moins un moyen mécanique prévu au niveau de la tuyère de soufflage et imposant un brassage en continu de ce gaz dans le corps creux moulé .

3. Procédé selon la revendication 2 caractérisé en ce que le moyen mécanique est un ventilateur prévu dans l'extrémité de la tuyère de soufflage.

4. Procédé selon la revendication 1 caractérisé en ce que le gaz soumis à une agitation forcée est le gaz de soufflage du corps creux.

5. Procédé selon la revendication 1 caractérisé en ce que le gaz soumis à une agitation forcée est un gaz de réfrigération du corps creux moulé.

6. Procédé selon la revendication 1 caractérisé en ce que le gaz soumis à une agitation forcée est un gaz réactif utilisé pour traiter superficiellement la paroi interne du corps creux moulé.

7. Procédé selon la revendication 1 caractérisé en ce que la matière thermoplastique utilisée pour mouler le corps creux est une polyoléfine.

8. Dispositif de moulage par soufflage pour la réalisation du procédé selon l'une quelconque des revendications 1 à 7 comportant au moins un moule de soufflage pouvant coopérer avec au moins une tuyère de soufflage caractérisé en ce que la tuyère de soufflage est équipée d'au moins un moyen mécanique permettant une mise en agitation forcée des gaz injectés dans le moule.

9. Dispositif selon la revendication 8 caractérisé en ce que le moyen mécanique est constitué par un ventilateur prévu dans l'extrémité de la tuyère de soufflage.

## Claims

1. Method for the blow moulding of hollow bodies from thermoplastic material, involving injection, through a blowing nozzle, of at least one pressurized gas into a portion of thermoplastic parison contained in a mould, characterized in that the gas in the mould is subjected to forced agitation during the moulding.

2. Method according to Claim 1, characterized in that the agitation is obtained using at least one mechanical means provided at the blowing nozzle, which continuously stirs this gas in the moulded hollow body.

3. Method according to Claim 2, characterized in that the mechanical means is a fan provided in the end of the blowing nozzle.

4. Method according to Claim 1, characterized in that the gas subjected to forced agitation is the gas for blowing the hollow body.

5. Method according to Claim 1, characterized in that the gas subjected to forced agitation is a gas for cooling the moulded hollow body.

6. Method according to Claim 1, characterized in that the gas subjected to forced agitation is a reactive gas used for surface treatment of the inner wall of the moulded hollow body.

7. Method according to Claim 1, characterized in that thermoplastic material used for moulding the hollow body is a polyolefin.

8. Blow moulding device for carrying out the method according to any one of Claims 1 to 7, including at least one blow mould which can interact with at least one blowing nozzle, characterized in that the blowing nozzle is equipped with at least one mechanical means allowing forced agitation of the gases injected into the mould.

9. Device according to Claim 8, characterized in that the mechanical means consists of a fan provided in the end of the blowing nozzle.

## Patentansprüche

1. Verfahren zum Blasformen von Hohlkörpern aus thermoplastischem Kunststoff, einschließend die Injektion mindestens eines unter Druck stehenden Gases durch eine Blasdüse in einen in einer Form eingeschlossenen thermoplastischen Vorformlingteil, dadurch gekennzeichnet, daß man während des Formens das Gas in der Form einer Zwangsbewegung unterwirft.

2. Verfahren nach Anspruch 1, dadurch gekennzeichnet, daß man die Bewegung mittels mindestens einer mechanischen Einrichtung erhält, die auf der Höhe der Blasdüse vorgesehen ist und ein fortlaufendes Durchmischen dieses Gases im geformten Hohlkörper erzwingt.

3. Verfahren nach Anspruch 2, dadurch gekennzeichnet, daß die mechanische Einrichtung ein im Ende der Blasdüse vorgesehener Ventilator ist.

4. Verfahren nach Anspruch 1, dadurch gekennzeichnet, daß das einer Zwangsbewegung unterworfene Gas das Gas zum Blasen des Hohlkörpers ist.

5. Verfahren nach Anspruch 1, dadurch gekennzeichnet, daß das einer Zwangsbewegung unterworfene Gas ein Gas zum Kühlen des geformten Hohlkörpers ist.

6. Verfahren nach Anspruch 1, dadurch gekennzeichnet, daß das einer Zwangsbewegung unterworfene Gas ein reaktives Gas ist, das benutzt wird, um die innere Wand des geformten Hohlkörpers oberflächlich zu behandeln.

7. Verfahren nach Anspruch 1, dadurch gekennzeichnet, daß der zum Formen des Hohlkörpers verwendete thermoplastische Kunststoff ein Polyolefin ist.

8. Blasformvorrichtung zur Durchführung des Verfahrens nach einem beliebigen der Ansprüche 1 bis 7, mit mindestens einer Blasform, die mit mindestens einer Blasdüse zusammenwirken kann, dadurch gekennzeichnet, daß die Blasdüse mit mindestens einer mechanischen Einrichtung versehen ist, die ein Versetzen von in die Form injizierten Gasen in eine Zwangsbewegung ermöglicht.

9. Vorrichtung nach Anspruch 8, dadurch gekennzeichnet, daß die mechanische Einrichtung von einem im Ende der Blasdüse vorgesehenen Ventilator gebildet wird.
